# DEMANDE DE BREVET EUROPEEN

(11) **EP 3 495 710 A1**
(43) Date de publication de la demande: **12.06.2019**
(21) Numéro de dépôt: 18211038.7
(22) Date de dépôt: 07.12.2018
(51) Int. Cl.: F16M 11/10, F16M 13/02, G03B 17/56

(54) **EQUIPEMENT DE FIXATION DE DISPOSITIFS D'ACQUISITION DE DONNÉES MÉDIA**

(30) Priorité: 08.12.2017 FR 1761857
(71) Demandeur: Euromedia, 93210 Saint-Denis la Plaine (FR)
(72) Inventeur: XUEREB, Yannick, 75010 PARIS (FR)
(74) Mandataire: Cabinet Beau de Loménie

(57) **Abrégé**

Equipement (100) comportant une partie creuse et une enveloppe, l'équipement (100) étant caractérisé en ce que :
- la partie creuse (1) est configurée pour permettre d'enfiler l'équipement (100) sur un support;
- l'enveloppe (2) comporte :
∘ au moins un dispositif (MED) de capture de données de média ;
∘ au moins un dispositif (COM) de communication sans fil configuré pour transmettre au moins des données obtenues à partir desdites données de média à un récepteur;
∘ au moins un module (ALIM) d'alimentation énergétique desdits dispositifs ; et
∘ une matière élastique conçue pour permettre une fixation de l'équipement (100) au dit support par frottement et une protection au moins physique desdits dispositifs (MED, COM), dudit au moins un module (ALIM) et des personnes présentes dans une zone d'utilisation de l'équipement (100).

## Description

### Arrière-plan de l'invention

L'invention se rapporte au domaine général de la mécanique.

Elle concerne plus particulièrement la fixation de dispositifs de capture de données de média sur des supports situés dans une zone où des contraintes de sécurité sont imposées, notamment dans une zone d'activités sportives ou culturelles.

Dans le cadre de la couverture médiatique d'événements sportifs ou culturels, les dispositifs de capture de données de média, tels que les appareils photo et les caméras vidéos sont généralement fixés à des supports qui sont eux-mêmes fixes. Pour des raisons de protection de ces dispositifs et pour la sécurité des personnes présentes dans la zone d'utilisation de ces dispositifs, ces supports sont situés à l'extérieur ou en périphérie de la zone dans laquelle se déroulent les activités sportives ou culturelles. Il est donc impossible ou très difficile, notamment lorsque la zone dans laquelle se déroulent les activités est étendue, de capturer des données relatives à certains détails de ces activités, en particulier des effets immersifs de l'intérieur même de la zone.

Pour rapprocher d'avantage les dispositifs de capture de données de média à une zone dans laquelle se déroulent des activités sportives ou culturelles, ces dispositifs peuvent être fixés à des supports mobiles. Cependant, ces supports mobiles, par exemple les drones, sont couteux et ne permettent pas non plus de couvrir certains détails de l'intérieur de la zone dans laquelle se déroulent les activités vu que leurs trajectoires ne correspondent pas forcément aux mouvements imprévisibles des personnes. De plus, ces supports mobiles sont aussi généralement exclus pour des raisons de sécurité et de protection notamment des personnes.

De ce fait, il existe un besoin pour une solution permettant de fixer des dispositifs de capture de données de média sur un support d'une façon qui facilite l'installation et la désinstallation de ces dispositifs, et qui garantit aussi la sécurité de ces dispositifs ainsi que la sécurité des personnes présentes dans la zone des activités sportives ou culturelles.

### Objet et résumé de l'invention

L'invention vise ainsi un équipement comportant une partie creuse et une enveloppe, l'équipement est caractérisé en ce que :
- la partie creuse est configurée pour permettre d'enfiler l'équipement sur un support;
- l'enveloppe comporte :
   ∘ au moins un dispositif de capture de données de média ;
   ∘ au moins un dispositif de communication sans fil configuré pour transmettre à un récepteur au moins des données obtenues à partir des données de média capturées;
   ∘ au moins un module d'alimentation énergétique desdits dispositifs ; et
   ∘ une matière élastique conçue pour permettre une fixation de l'équipement au support par frottement et une protection au moins physique desdits dispositifs, dudit au moins un module et des personnes présentes dans une zone d'utilisation de l'équipement.

Au sens de l'invention, une matière élastique est une matière étirable, compressible, souple, extensible et malléable.

Au sens de l'invention, une matière élastique est une matière solide qui a la propriété de retrouver sa forme d'origine après avoir été déformé.

L'invention permet ainsi d'assembler les dispositifs de capture de données et de communication sans fil ainsi que leur(s) module(s) d'alimentation dans l'enveloppe d'une façon protectrice grâce à la matière élastique. En cas d'un accident, par exemple si une personne heurte l'équipement, le choc est amorti grâce à la matière élastique, les dispositifs et le(s) module(s) compris dans l'enveloppe sont protégés, et il n'y a pas de danger pour la personne non plus.

De plus, l'équipement peut être enfilé par simple frottement sur un support grâce à la partie creuse et à la matière élastique.

L'équipement selon l'invention peut être facilement fixé à un support ou désinstallé d'un support, il est donc adapté pour la couverture médiatique d'activités temporaires.

La partie creuse a une dimension plus petite que la dimension correspondante du support sur lequel l'équipement est enfilé. Ainsi, l'équipement reste fixé au support par frottement. La fixation est possible grâce à la matière élastique.

La partie creuse peut être agencée dans l'enveloppe.

Dans un mode particulier de réalisation de l'invention, l'équipement est un manchon, autrement dit une gaine ou un tube ouvert des deux sens, ce qui facilite l'enfilement et le dés-enfilement de l'équipement sur un support.

Dans un autre mode de réalisation de l'invention, la paroi intérieure de l'enveloppe, correspondante à la partie creuse, est cylindrique, ce qui facilite l'enfilement de l'équipement sur un support cylindrique sans aucune contrainte sur une orientation d'enfilement. La paroi extérieure de l'enveloppe est de forme cylindrique, rectangulaire, triangulaire ou autre.

Les parois intérieure et extérieure de l'enveloppe peuvent avoir des formes différentes.

Dans un mode particulier de réalisation de l'invention, l'enveloppe est un assemblage d'au moins deux parties. De ce fait, l'enveloppe peut être ouverte en désassemblant les au moins deux parties pour pouvoir déposer ou extraire un ou plusieurs dispositifs de capture de données de média, un ou plusieurs dispositifs de communication sans fil, un ou plusieurs modules d'alimentation ou autres composants compris dans l'enveloppe. Ce mode de réalisation de l'invention permet aussi d'établir ou de modifier un câblage entre les différents composants compris dans l'enveloppe.

Dans un mode particulier de réalisation de l'invention, la partie creuse est débouchante. Ce mode permet d'enfiler l'équipement sur le support dans un sens ou de le retourner et de l'enfiler dans l'autre sens. Aussi, l'équipement peut être enfilé sur le support même si le support est fixé à un autre dispositif dans l'une des deux sens. Ce mode de réalisation permet aussi d'ajuster la position de l'équipement par rapport au support.

Dans un autre mode de réalisation, la partie creuse est non débouchante. L'équipement peut être enfilé sur un support comme un bonnet.

Dans un mode particulier de réalisation de l'invention, l'au moins un dispositif de capture de données de média est un appareil photo ou une caméra vidéo ou un capteur de son ou un capteur de vitesse. L'invention permet ainsi de capturer des données de différentes natures, images, vidéos, sons, ou autres.

Dans un mode particulier de réalisation de l'invention, l'au moins un dispositif de capture de données de média est placé dans un logement permettant l'ajustement d'au moins un angle de capture du dispositif de capture de données de média. De ce fait, plusieurs angles de capture sont possibles, ce qui permet une meilleure couverture médiatique.

Dans un mode particulier de réalisation de l'invention, l'au moins un dispositif de capture de données de média comporte des moyens de réception et d'interprétation de commandes à distance, ce qui permet de choisir les moments auxquels des commandes au dispositif de capture sont envoyées et d'optimiser l'autonomie du ou des modules d'alimentation.

Dans un mode particulier de réalisation de l'invention, l'au moins un dispositif de communication sans fil est configuré pour pouvoir communiquer via un réseau mobile privé PMR, un réseau cellulaire, un réseau WiFi, un réseau Bluetooth, un réseau ZigBee ou un réseau HiperLAN. Plusieurs normes de communication sont envisageables.

Dans un mode particulier de réalisation de l'invention, l'au moins un dispositif de communication sans fil est configuré pour pouvoir communiquer via un réseau mobile privé PMR, ce qui permet d'avoir des ressources de communication sans fil dédiées et de réduire les interférences de signaux.

Dans un mode particulier de réalisation de l'invention, l'au moins un dispositif de communication sans fil est configuré pour pouvoir communiquer via un réseau cellulaire. L'invention est donc utilisable dans la quasi-totalité des environnements comme presque toute zone géographique est couverte par au moins un réseau cellulaire.

Dans un mode particulier de réalisation de l'invention, l'au moins un dispositif de communication sans fil est configuré pour pouvoir communiquer via un réseau Bluetooth, un réseau ZigBee. L'invention est donc utilisable dans des zones de courtes à moyennes dimensions et dont les données à transférer ne nécessitent pas de large bande passante.

Dans un mode particulier de réalisation de l'invention, l'enveloppe comporte un trou placé à proximité du dispositif de communication sans fil. Ce mode permet de minimiser les obstacles à la transmission sans fil de données et de dissiper une chaleur dégagée par le dispositif de communication sans fil.

Dans un mode particulier de l'invention, l'enveloppe comporte un trou pour dissiper une chaleur dégagée par au moins un composant compris dans l'enveloppe. Dans un mode de réalisation, l'enveloppe comporte un trou de ventilation placé à proximité de l'au moins un dit dispositif de capture de données de média, ou un dit dispositif de communication sans fil ou un dit module d'alimentation énergétique, compris tous dans l'enveloppe.

Dans un mode particulier de réalisation de l'invention, la matière élastique n'affecte pas la qualité de fonctionnement des dispositifs de communication sans fil.

Dans un mode particulier de réalisation de l'invention, l'au moins un module d'alimentation énergétique est une batterie électrique ou un système de stockage d'énergie solaire ou éolienne. Des modules d'alimentation de différentes natures sont ainsi possibles. La nature énergétique du ou des modules d'alimentation dépend des dispositifs de capture de données et de communication sans fil et aussi de la zone d'utilisation de l'invention.

Dans un mode particulier de réalisation de l'invention, l'enveloppe comporte un trou de ventilation placé à proximité du ou des modules d'alimentation énergétique.

Dans un mode particulier de réalisation de l'invention, l'au moins un dispositif de communication sans fil est placé entre l'au moins un dispositif de capture de données de média et l'au moins un module d'alimentation énergétique. Ainsi, lorsque l'équipement est fixé verticalement à un support, la distribution du poids ne cause pas des problèmes de sécurité ou de fonctionnement des différents composants. En effet, d'une façon générale, un module d'alimentation est plus lourd qu'un dispositif de communication, et un dispositif de communication est plus lourd qu'un dispositif de capture de données.

Dans un mode de réalisation, l'équipement conforme à l'invention a une composition matérielle caractérisée par une résistance physique, thermique ou électromagnétique adaptée à un environnement d'utilisation de l'équipement.

Dans un mode particulier de réalisation de l'invention, la matière élastique est une mousse de polyéthylène. Sa composition chimique et ses caractéristiques physiques ont beaucoup d'avantages qui la rendent adéquate pour une fixation sûre et protectrice et répondent aux contraintes relatives aux zones d'utilisation de l'invention, telles que les zones d'activités sportives ou culturelles.

On peut également envisager, dans d'autres modes de réalisation, que l'équipement présente en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- La figure 1 est une architecture matérielle d'un équipement comportant une partie creuse et une enveloppe selon un mode de réalisation de l'invention ;
- La figure 2 est une architecture matérielle d'une partie d'un équipement selon un mode de réalisation de l'invention ;
- La figure 3 présente un équipement fixé à un support selon un mode de réalisation de l'invention ;
- La figure 4 présente une application de l'invention dans une piste de ski selon un mode de réalisation de l'invention ; et
- La figure 5 présente une application de l'invention dans une piste de kayak slalom selon un mode de réalisation de l'invention.

### Description détaillée de l'invention

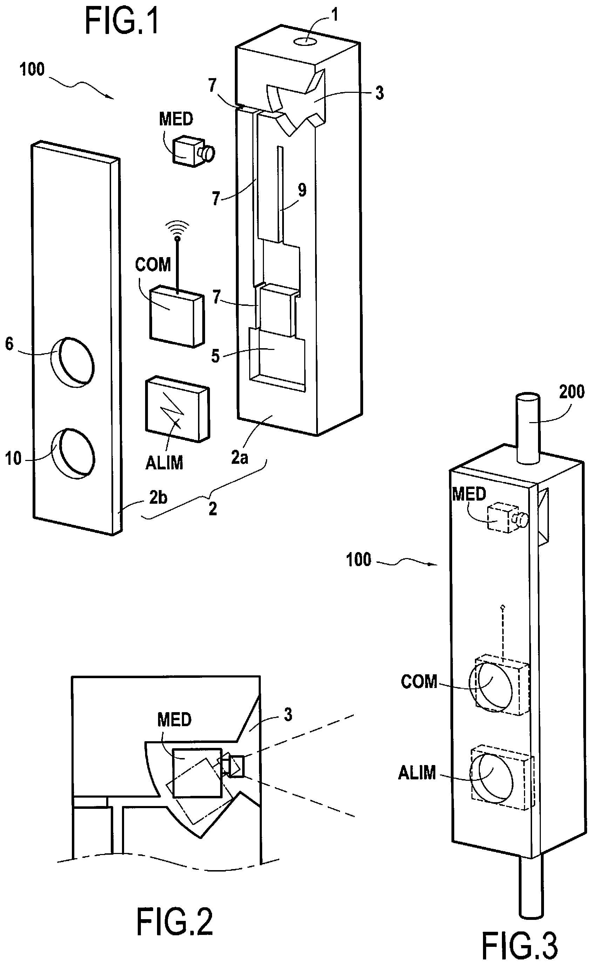

La **figure 1** illustre une architecture matérielle de l'équipement 100 selon l'invention. L'équipement 100 comporte une partie creuse 1 et une enveloppe 2. La partie creuse 1 est configurée pour permettre d'enfiler l'équipement 100 sur un support. L'enveloppe 2 comporte :
∘ au moins un dispositif MED de capture de données de média, placé dans un logement 3 ;
∘ au moins un dispositif COM de communication sans fil configuré pour transmettre au moins des données obtenues à partir des données de média capturées à un récepteur, l'au moins un dispositif COM de communication sans fil étant placé dans un logement 4 ;
∘ au moins un module ALIM d'alimentation énergétique desdits dispositifs, placé dans un logement 5 ; et
∘ une matière élastique conçue pour permettre une fixation de l'équipement au dit support par frottement et une protection au moins physique des dispositifs MED et COM et du module ALIM et de personnes présentes dans une zone d'utilisation de l'équipement.

L'équipement, selon l'invention, permet ainsi d'assembler les dispositifs MED et COM de capture de données et de communication sans fil ainsi que leur(s) module(s) d'alimentation ALIM dans l'enveloppe 2 d'une façon qui leur protège grâce à la matière élastique. De plus, en cas de choc physique entre l'équipement et une personne présente dans la zone d'utilisation de l'équipement, l'équipement et la personne sont protégés grâce à la matière élastique.

De plus, l'équipement peut être enfilé par simple frottement sur un support grâce à la partie creuse et à la matière élastique.

La partie creuse 1 est agencée dans l'enveloppe 2.

L'au moins un dispositif MED de capture de données de média selon l'invention est un appareil photo ou une caméra vidéo ou un capteur de son ou un capteur de vitesse. Des données de différentes natures telles que des images, vidéos, sons, ou autres peuvent être capturées.

Dans un mode particulier de réalisation de l'invention, l'au moins un dispositif MED de capture de données de média est une caméra Marshall CV225 (marque déposée).

La forme et les dimensions du logement 3 sont adaptées à la forme et aux dimensions du ou des dispositifs MED de capture de données de média.

La **figure 2** présente une architecture d'un logement 3 dédié à au moins un dispositif MED de capture de données de média. Dans un mode particulier de réalisation de l'invention, illustrée à la figure 2, la forme du logement 3 permet l'ajustement d'au moins un angle de capture du dispositif MED de capture de données de média. De ce fait, plusieurs angles de capture sont possibles, ce qui permet une meilleure couverture médiatique. L'ajustement d'un angle de capture peut être manuel ou automatique commandé à distance ou à proximité.

L'enveloppe 2 comporte une zone transparente à l'extrémité du logement 3 dédié à l'au moins un dispositif MED de capture de données de média, plus précisément la zone transparente est placée vis-à-vis d'au moins un capteur d'un dispositif MED tel qu'un objectif de caméra ou un microphone. La zone transparente peut être une fenêtre en verre ou en plastique ou en plexiglas ou autre matière transparente, ou tout simplement un trou dégagé.

Dans un mode particulier de réalisation, deux ou plusieurs dispositifs MED de capture de données de média sont utilisés pour capturer des données de différents angles de capture. Les dispositifs MED sont placés dans un logement 3 adapté à leurs formes et dimensions, et l'enveloppe 2 comporte une zone transparente devant chaque angle de capture d'un dispositif Med de capture.

Dans un mode de réalisation, l'au moins un dispositif MED de capture de données de média comporte des moyens de réception et des moyens d'interprétation de commandes. L'au moins un dispositif MED de capture de données de média peut être commandé par un utilisateur à distance, ce qui permet de choisir des moments auxquels envoyer des commandes à l'au moins un dispositif MED et d'optimiser l'autonomie du ou des modules ALIM d'alimentation énergétique. Les commandes peuvent être envoyées à un dispositif MED de capture de données de média sont par exemple la mise en marche, la mise en veille ou l'arrêt du dispositif MED, l'utilisation d'un filtre ou d'un mode spécifique de capture de données, le changement de la résolution de capture, la compression des données capturées, la reconnaissance faciale, le suivi d'un objet spécifique pour capturer son mouvement ou autre commande.

Dans un mode particulier de réalisation, un dispositif COM de communication sans fil joue le rôle d'un relais entre un utilisateur et un dispositif MED de capture de données de média: un utilisateur envoie une ou plusieurs commandes d'un dispositif MED à un dispositif COM de communication sans fil, qui, à son tour, transfère la ou les commandes reçues au dispositif MED correspondant.

L'au moins un dispositif MED de capture de données de média peut aussi être mis en marche d'une façon permanente pendant toute la durée d'utilisation de l'équipement.

Les données capturées par au moins un dispositif MED de capture de données de média sont transférées telles qu'elles ou après traitement à un ou plusieurs dispositifs COM de communication sans fil. Le traitement de données capturées peut être une compression, une décompression, un filtrage, un dé-filtrage, une mise en forme spécifique, une conversion de format, une accélération, un ralentissement, ou autre. Ce traitement peut être effectué au niveau d'un dispositif MED de capture, comme il peut être effectué au niveau d'un dispositif COM de communication sans fil. Des commandes peuvent être aussi transférées entre un dispositif MED et un dispositif COM, telles qu'une commande de mise en marche ou mise en veille en arrêt d'un dispositif ou une commande de traitement de données.

Dans un mode de réalisation de l'invention, le transfert de données ou de commandes entre les dispositifs MED et COM est effectué sur un support filaire tel qu'un câble cuivré ou un câble coaxial ou une fibre optique. Le support filaire peut être logé dans un logement 7 à l'intérieur de l'enveloppe pour assurer la protection du support filaire et la sécurité des données ou commandes transférées. Au cas où l'enveloppe 2 est une seule pièce non divisible, le support filaire peut être branché à la paroi extérieure de l'enveloppe pour pouvoir changer le câblage. Cependant, pour une meilleure protection des supports filaires et des données et commandes transférées, les supports filaires sont placés à l'intérieur de l'enveloppe 2.

Dans un autre mode de réalisation de l'invention, Le transfert de données ou de commandes entre les dispositifs MED et COM est effectué en utilisant des moyens de communication sans fil de courte distance telles que l'infrarouge ou le Bluetooth.

Dans un mode particulier de réalisation, l'au moins un dispositif COM transmet à un récepteur des informations sur l'état de l'équipement telles qu'un pourcentage d'autonomie d'un module ALIM, une température mesurée à l'intérieure ou à l'extérieur de l'enveloppe 2, un état d'une carte mémoire d'un dispositif MED, etc.

Dans un mode particulier de réalisation de l'invention, l'au moins un dispositif COM de communication sans fil est un transmetteur vidéo COBAM SOLO7 HD (marque déposée).

La forme et les dimensions du logement 4 sont adaptées à la forme et les dimensions de l'au moins un dispositif COM de communication sans fil.

L'au moins un dispositif COM de communication sans fil peut avoir au moins une antenne qui se loge dans un logement 9 dans l'enveloppe 2.

L'au moins un dispositif COM de communication sans fil selon l'invention est configuré pour pouvoir communiquer via un réseau mobile privé PMR, un réseau cellulaire, un réseau WiFi, un réseau Bluetooth, un réseau ZigBee, un réseau HiperLAN ou un réseau utilisant au moins une autre norme de communication.

En particulier, un réseau privé PMR permet de choisir des fréquences dédiées qui ne s'interfèrent pas avec d'autres fréquences présentes dans l'environnement d'utilisation de l'invention, comme les fréquences utilisées pour les communications téléphoniques cellulaires. Dans un tel mode de réalisation, le transfert de données capturées de données est plus sécurisé et de meilleure qualité.

Dans des modes particuliers où l'au moins un dispositif COM de communication sans fil selon l'invention est configuré pour pouvoir communiquer via un réseau Bluetooth, un réseau ZigBee, un réseau HiperLAN, le dispositif COM consomme moins de puissance qu'en utilisant un réseau cellulaire. Cependant, un réseau cellulaire peut être choisi vu que les réseaux cellulaires sont publics et omniprésents.

Dans un mode particulier où il y a une visibilité entre au moins un dispositif COM de communication sans fil placé dans l'équipement et un utilisateur, l'au moins un dispositif COM est configuré pour pouvoir communiquer via un réseau LiFi ou un réseau utilisant une autre norme de communication optique sans fil.

Dans un mode particulier de réalisation de l'invention, l'enveloppe comporte un trou 6 placé à proximité du ou des dispositifs COM de communication sans fil. Ce mode permet de minimiser les obstacles à la communication sans fil et de dissiper la chaleur dégagée par l'au moins un dispositif COM de communication sans fil. Le trou 6 peut être complètement ouvert ou partiellement ouvert en utilisant un filtre.

La ou les matières qui composent l'enveloppe 2 sont choisies d'une façon à ne pas affecter la qualité des communications sans fil, comme par exemple les matières qui n'absorbent pas les ondes électromagnétiques formants le support de ces communications sans fil.

L'au moins un module ALIM d'alimentation énergétique selon l'invention est une batterie électrique ou un système de stockage d'énergie solaire ou éolienne.

La nature de l'au moins un module ALIM d'alimentation énergétique est adéquate aux dispositifs de capture de données MED et de communication sans fil COM et à la zone d'utilisation de l'invention. Par exemple, un module d'alimentation de type un système de stockage d'énergie solaire peut être utilisé dans une zone lumineuse. Autre exemple, un module d'alimentation de type batterie électrique DC peut être utilisé pour alimenter un dispositif MED ou COM qui s'alimente avec une énergie électrique de type DC.

L'au moins un module ALIM d'alimentation énergétique selon l'invention permet d'alimenter au moins un dispositif MED de capture de données ou un dispositif COM de communication sans fil. Les logements 7 présentés sur la figure 1 permettent le passage de liaisons, tels que des câbles d'alimentation, entre un module ALIM d'alimentation et un dispositif MED ou un dispositif COM. Un même module d'alimentation peut être utilisé pour alimenter un dispositif MED et un dispositif COM au même temps.

L'au moins un dispositif MED de capture de données de média, l'au moins un dispositif COM de communication sans fil et l'au moins un module ALIM d'alimentation énergétique peuvent être fournis par différents fabricants et/ou différents fournisseurs. Cependant, une comptabilité technologique est requise entre l'au moins un dispositif MED et l'au moins un module ALIM qui l'alimente en énergie, entre l'au moins un dispositif COM et l'au moins un module ALIM qui l'alimente en énergie, et entre l'au moins un dispositif MED qui capture des données de média et l'au moins un dispositif COM qui transfère des données obtenues à partir des données de média capturées.

Dans un mode particulier de réalisation de l'invention, l'au moins un module d'alimentation énergétique est une batterie Accumulateur Ansmann Lithium- Ion (marque déposée).

La forme et les dimensions du logement 5 sont adaptées à la forme et les dimensions de l'au moins un module ALIM d'alimentation énergétique.

Dans des modes particuliers de réalisation de l'invention, l'équipement peut comporter au moins un logement pour un dispositif de conversion énergétique tel qu'un panneau d'énergie solaire ou une hélice et des logements pour des moyens de liaison entre le dispositif de conversion énergétique et au moins un module ALIM.

Dans un mode particulier de réalisation de l'invention, l'enveloppe comporte un trou 10 de ventilation placé à proximité du ou des modules ALIM d'alimentation énergétique. Le trou 10 de ventilation peut être complètement ouvert et débouchant ou partiellement ouvert en utilisant un filtre. Le trou de ventilation peut aussi comporter une hélice de ventilation. Dans un autre mode de réalisation, à la place d'un trou de ventilation, l'enveloppe 2 peut comporter une matière poreuse placée à proximité d'un module ALIM d'alimentation et qui laisse passer l'air pour la ventilation du module ALIM.

Dans un mode particulier de réalisation, un même trou (10/6) sert à la fois d'un trou de ventilation pour un ou plusieurs dispositifs COM de communication sans fil et pour un ou plusieurs modules ALIM d'alimentation énergétique. Dans d'autres modes de réalisation, deux trous séparés sont compris dans l'enveloppe 2.

Dans un mode particulier de réalisation de l'invention, l'enveloppe 2 est un assemblage d'au moins deux parties, telles que les deux parties 2a et 2b présentées sur la figure 1. De ce fait, l'enveloppe peut être ouverte en désassemblant les au moins deux parties pour pouvoir déposer ou extraire un ou plusieurs dispositifs de capture de données de média MED, un ou plusieurs dispositifs de communication sans fil COM, un ou plusieurs modules d'alimentation ALIM ou autres composants compris dans l'enveloppe. Ce mode de réalisation de l'invention permet aussi d'établir ou de modifier un câblage entre les différents composants compris dans l'enveloppe.

L'enveloppe 2 peut être fabriquée entièrement et uniquement par la matière élastique telle que présentée à figure 1. Elle peut aussi être fabriquée par des assemblages entre la matière élastique et d'autres matériaux. Cependant, la matière élastique est essentiellement présente à la paroi intérieure de l'enveloppe 2 qui forme la partie creuse 1. En effet, les caractéristiques de la matière élastique permettent la fixation de l'équipement 100 selon l'invention à un support 200. Aussi, la matière élastique est essentiellement présente à la paroi extérieure de l'enveloppe 2 vu que les caractéristiques de la matière élastique permettent la protection au moins physique des dispositifs MED et COM et du ou des modules ALIM placés à l'intérieur de l'enveloppe 2. La matière élastique permet aussi de protéger les personnes présentes dans la zone d'utilisation de l'invention vu qu'elle peut amortir les chocs.

L'équipement 100 selon l'invention peut être enfilé sur un support 200 et se fixe au support 200 par frottement. La **figure 3** illustre un équipement 100 fixé à un support 200 selon un mode de réalisation de l'invention.

La partie creuse 1 a une dimension plus petite que la dimension correspondante du support 200 sur lequel l'équipement 100 est enfilé. Ainsi, l'équipement 100 reste fixé au support par frottement. Comme la paroi intérieure de l'enveloppe 2 correspondant à la paroi extérieur de la partie creuse 1 est fabriquée essentiellement par la matière élastique, il suffit d'appliquer une force, telle qu'une force mécanique, pour enfiler l'équipement 100 sur un support 200. La matière élastique se déforme en réponse à la force appliquée et permet ainsi l'enfilement. En absence d'une force appliquée, la matière élastique reprend sa forme initiale. L'équipement 100 est alors fixé au support 200 par frottement.

Dans un mode particulier de réalisation de l'invention, illustré à la figure 3, la partie creuse 1 de l'équipement 100 et le support 200 ont des formes cylindriques. Le diamètre de la partie creuse est légèrement inférieure au diamètre du support 200.

La force appliquée requise pour fixer l'équipement 100 à un support 200 dépend de la forme de l'équipement, de la matière élastique et de la forme et de la matière du support. Une fois l'équipement 100 est fixé au support 200, l'équipement reste fixé par frottement même si le support est en mouvement ou si une autre force s'applique au moins à l'équipement 100 ou au support 200 mais qui ne peut pas désassembler l'ensemble formé par l'équipement 100 et le support 200, par exemple une force mécanique inférieure à la force mécanique requise pour la fixation.

Dans un mode particulier de réalisation de l'invention, l'enveloppe 2 est un manchon. De cette façon, la partie creuse 1 est cylindrique, ce qui facilite son enfilement sur un support cylindrique 200 sans aucune contrainte sur une orientation d'enfilement.

Dans un autre mode de réalisation de l'invention, la partie intérieure de l'enveloppe, correspondante à la partie creuse 1, est cylindrique et la partie extérieure de l'enveloppe 2 est de forme cylindrique, rectangulaire, triangulaire ou autre.

Dans un mode particulier de réalisation de l'invention, la partie creuse 1 est débouchante, comme illustrée à la figure 3. Ce mode permet d'enfiler la partie creuse 1 et ainsi l'équipement 100 sur le support 200 des deux différents sens, par exemple du haut vers le bas ou du bas vers le haut. L'équipement peut ainsi être enfilé sur le support 200 même si ce support 200 est fixé à un autre dispositif dans une des deux sens.

Dans un autre mode de réalisation, la partie creuse 1 n'est pas débouchante. L'équipement 100 s'enfile sur le support 200 comme un bonnet. Un seul sens de fixation est possible.

La matière élastique permet la protection au moins physique des dispositifs MED et COM et de l'au moins un module ALIM compris dans l'enveloppe. Cette protection au moins physique est relative à la résistance aux chocs et au taux d'élasticité de la matière élastique.

Dans un mode de réalisation, la matière élastique peut aussi avoir des caractéristiques de protection environnementale des composants compris dans l'enveloppe 2, par exemple une isolation thermique, un échauffement, un refroidissement, une étanchéité à la poussière, une étanchéité aux liquides, une isolation contre le feu, et autres.

Dans un mode de réalisation, la matière élastique peut aussi offrir une protection fonctionnelle des composants compris dans l'enveloppe 2 grâce par exemple à une isolation électromagnétique.

La matière élastique protège au moins physiquement les personnes présentes dans une zone d'utilisation de l'équipement. Les chocs potentiels entre l'équipement et une personne présente dans la zone d'utilisation sont amortis.

L'équipement 100, fabriqué entièrement ou partiellement par la matière élastique, est conçu pour être adapté à la zone de son utilisation.

Dans un mode particulier de réalisation de l'invention, la matière élastique est une mousse de polyéthylène. Sa composition chimique est non allergène et non toxique. Sa texture est flexible ce qui facilite la disposition et la désinstallation de composants dans l'enveloppe 2. Sa flexibilité permet aussi d'amortir les chocs potentiels entre l'équipement et une personne présente dans la zone d'utilisation de l'invention. La mousse de polyéthylène est aussi caractérisée par sa légèreté, ce qui facilite le port et la fixation de l'équipement à un support. La mousse de polyéthylène est adéquate alors pour des applications de l'invention dans le cadre de couverture médiatique des événements temporaires. Elle est aussi stable aux ultra-violets, ce qui permet d'appliquer l'invention dans des zones où les ondes ultra-violets sont présents et de protéger les dispositifs MED et COM et le(s) module(s) ALIM de ces ondes.

Dans un mode particulier de réalisation de l'invention, la matière élastique est une mousse de polyéthylène de marque Plastazote (marque déposée).

D'autres matières élastiques peuvent être utilisées.

Dans un mode particulier de réalisation de l'invention, l'au moins un dispositif de communication sans fil est placé entre l'au moins un dispositif de capture de données de média et l'au moins un module d'alimentation énergétique.

Le positionnement des dispositifs MED et COM et de l'au moins un module ALIM compris dans l'enveloppe 2 n'est pas restreint par l'architecture illustrée à la figure 1.

Dans un mode de réalisation de l'invention, l'équipement 100 est fixé verticalement à un support 200 comme illustré à la figure 3. Comme d'une façon générale, un module d'alimentation ALIM est plus lourd qu'un dispositif COM de communication sans fil, et un dispositif COM de communication est plus lourd qu'un dispositif MED de capture de données, la distribution du poids ne cause pas des problèmes de sécurité ou de fonctionnement des différents composants. En effet, dans ce mode de réalisation, le composant le plus lourd est placé en bas ce qui permet à l'équipement 100 d'être stable par l'effet de la gravité. De plus, chaque dispositif ou module peut fonctionner normalement vu qu'il n'est pas subit à une force insupportable de poids qui s'exerce du haut sur lui.

Par la suite, deux exemples d'application de l'invention sont décrits: une application dans une piste de ski et une application dans une piste de kayak slalom. Cependant, l'invention peut avoir d'autres applications et ces exemples sont non exhaustifs.

### Description détaillée d'une première application de l'invention

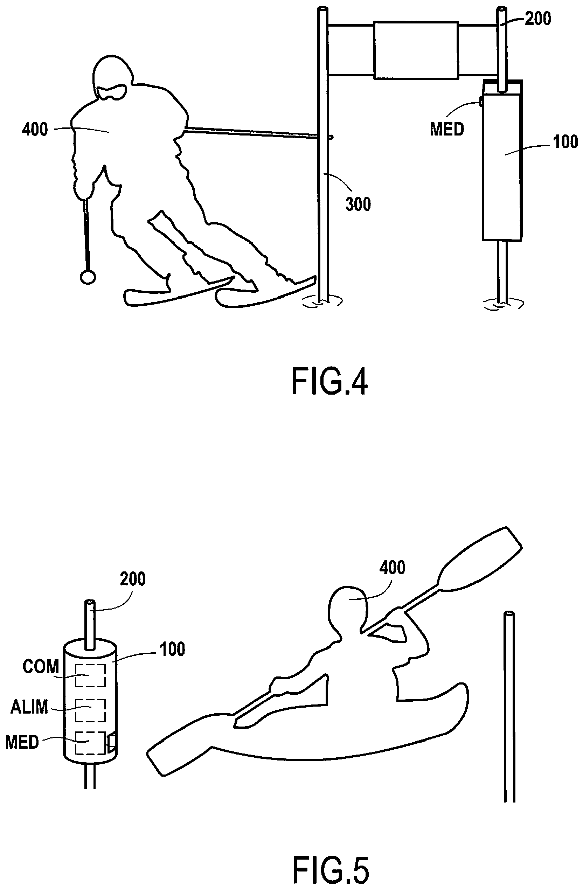

Ce premier exemple d'application de l'invention est relatif au ski. La **figure 4** illustre l'application de l'équipement 100 selon l'invention dans une piste de ski. L'équipement est fixé à un support qui est un piquet 200. Le piquet 200 est fixé au sol mais il oscille en cas de choc avec un skieur 400.

Dans ce mode de réalisation, la partie creuse 1 de l'équipement est débouchante, ce qui permet d'ajuster la hauteur de l'équipement 100 par rapport au sol et ainsi de régler l'angle de capture de l'au moins un dispositif MED de capture de données de média qui est dans ce mode de réalisation une caméra vidéo.

Dans un mode particulier de réalisation de l'invention, deux dispositifs MED de capture de média sont compris dans l'enveloppe 2 afin de capturer des données sous deux angles de capture différents, par exemple pour filmer des skieurs 400 avant et après leurs passages du piquet.

Pour cette application de couverture médiatique d'un événement de ski, le ou les dispositifs COM de communication sans fil transmettent des données obtenues des données de média capturées via un réseau mobile privé afin d'éviter toute interférence avec des fréquences présentes dans la zone de ski telles que les fréquences des réseaux cellulaires et les fréquences de diffusion de radio et de chaînes de télévision.

Dans cet exemple d'application, un seul module ALIM d'alimentation énergétique alimente les dispositifs MED et COM, ce qui permet de réduire le poids de l'équipement. Le module ALIM d'alimentation est une batterie électrique ayant une autonomie qui la rend apte à couvrir un événement de ski.

L'équipement 100 est formé par une matière élastique, résistante à la température et étanche à l'eau. L'équipement offre ainsi une protection physique aux composants MED, COM et ALIM logés dans son enveloppe 2 et une protection physique aux skieurs 400.

Dans l'exemple illustré à la figure 4, l'équipement 100 selon l'invention est fixé à un piquet 200 qui est lui-même fixé au sol et lié par un DRAPEAU à un autre piquet 300 fixé au sol. Le piquet 300 est plus proche d'un trajet fort probable des skieurs 400. Cette configuration est utilisée pour ne pas perturber les skieurs 400 par la présence de l'équipement 100 sur leur trajet. Lorsqu'un skieur passe au niveau de l'équipement 100, il peut toucher le piquet 300 situé sur son trajet. Le piquet 300 oscille et fait osciller le piquet 200. Comme l'équipement 100 est fixé au piquet 200, l'équipement 100 oscille aussi et l'au moins un dispositif MED capture une vidéo ayant un effet visuel, telle qu'une image mobile relative à la vitesse et à la synergie du skieur 400 et à une sensation du choc entre le skieur 400 et le piquet 300.

### Description détaillée d'une deuxième application de l'invention

L'invention peut aussi être appliquée au kayak slalom. La **figure 5** illustre un exemple de cette application. L'équipement 100 selon l'invention fixé à un support 200 nommé fiche. Les sportifs 400 traversent une piste aquatique dont le parcours est défini par des fiches 200.

Dans cette application, la partie creuse 1 de l'équipement 100 peut être non débouchante, dans un tel cas l'équipement 100 est porté comme un bonnet sur une fiche 200 et l'au moins un dispositif MED capte des données du haut par rapport aux kayaks.

La parie creuse 1 peut aussi être débouchante, comme illustrée à la figure 5. L'au moins un dispositif MED peut capter de plus des données prises au niveau de l'eau ou même immergé dans l'eau. Dans tel cas, l'au moins un dispositif COM de communication sans fil est positionné sans l'enveloppe 2 en dessus de l'au moins un dispositif MED de capture pour mieux capter les signaux de communication sans fil.

Dans cette application, la matière élastique de l'équipement 100 résiste à l'eau et aux chocs potentiels causés par les kayaks.

En cas de choc entre un sportif 400 et une fiche 200 à laquelle un équipement 100 est fixé, ce choc est capturé par l'au moins un dispositif MED et des données obtenues à partir des données capturées sont transmises par l'au moins un dispositif COM à un récepteur tel que des spectateurs ou un jury d'une compétition de kayak slalom.

## Revendications

1. Equipement (100) comportant une partie creuse (1) et une enveloppe (2), l'équipement (100) étant **caractérisé en ce que** :
- la partie creuse (1) est configurée pour permettre d'enfiler l'équipement (100) sur un support (200);
- l'enveloppe (2) comporte :
∘ au moins un dispositif (MED) de capture de données de média ;
∘ au moins un dispositif (COM) de communication sans fil configuré pour transmettre au moins des données obtenues à partir desdites données de média à un récepteur;
∘ au moins un module (ALIM) d'alimentation énergétique desdits dispositifs ; et
∘ une matière élastique conçue pour permettre une fixation de l'équipement (100) au dit support (200) par frottement et une protection au moins physique desdits dispositifs (MED, COM), dudit au moins un module (ALIM) et des personnes présentes dans une zone d'utilisation de l'équipement (100).

2. Equipement selon la revendication 1 dans lequel l'équipement est un manchon.

3. Equipement selon l'une quelconque des revendications 1 à 2 dans lequel l'enveloppe est un assemblage d'au moins deux parties.

4. Equipement selon l'une quelconque des revendications 1 à 2 dans lequel la partie creuse est débouchante.

5. Equipement selon l'une quelconque des revendications 1 à 3 dans lequel l'au moins un dispositif de capture de données de média est un appareil photo ou une caméra vidéo ou un capteur de son ou un capteur de vitesse.

6. Equipement selon l'une quelconque des revendications 1 à 4 dans lequel l'au moins un dispositif de capture de données de média est placé dans un logement permettant l'ajustement d'au moins un angle de capture du dispositif de capture de données de média.

7. Equipement selon l'une quelconque des revendications 1 à 6 dans lequel l'au moins un dispositif de capture de données de média est configuré pour pouvoir être commandé à distance.

8. Equipement selon l'une quelconque des revendications 1 à 7 dans lequel l'au moins un dispositif de communication sans fil est configuré pour pouvoir communiquer via un réseau mobile privé PMR, un réseau cellulaire, un réseau WiFi, un réseau Bluetooth, un réseau ZigBee ou un réseau HiperLAN.

9. Equipement selon l'une quelconque des revendications 1 à 8 dans lequel l'enveloppe comporte un trou de ventilation placé à proximité de l'au moins un dit dispositif (MED, COM), ou un dit module (ALIM) compris dans l'enveloppe (2).

10. Equipement selon l'une quelconque des revendications 1 à 9 dans lequel l'au moins un module d'alimentation énergétique est une batterie électrique ou un système de stockage d'énergie solaire ou éolienne.

11. Equipement selon l'une quelconque des revendications 1 à 10 dans lequel l'au moins un dispositif de communication sans fil est placé entre l'au moins un dispositif de capture de données de média et l'au moins un module d'alimentation énergétique.

12. Equipement selon l'une quelconque des revendications 1 à 11 dans lequel la matière élastique est une mousse de polyéthylène.

13. Equipement selon l'une quelconque des revendications 1 à 12 dans lequel l'équipement a une composition matérielle **caractérisée par** une résistance physique, thermique ou électromagnétique adaptée à un environnement d'utilisation de l'équipement.
